# EUROPEAN PATENT APPLICATION

(11) **EP 0 595 547 A2**
(43) Date of publication of application: **04.05.1994**
(21) Application number: 93308375.0
(22) Date of filing: 21.10.1993
(51) Int. Cl.: G11B 11/10

(54) **Magneto-optical recording medium, and data recording and reproducing method using it**

(30) Priority: 26.10.1992 JP 287908/92
(71) Applicant: CANON KABUSHIKI KAISHA, Tokyo (JP)
(72) Inventor: Miyakoshi, Toshimori, c/o Canon Kabushiki Kaisha, Tokyo (JP)
(74) Representative: Beresford, Keith Denis Lewis

(57) **Abstract**

A magneto-optical recording medium, which is made by consecutively laminating a first dielectric layer (2), a magnetic record layer (3), a second dielectric layer (4) and a light reflection layer (5) on a transparent substrate (1), is characterized in that a product (MₛxH_{c}) is not more than 1.0x10⁶ erg/cm³ between a saturation magnetization Mₛ of the magnetic record layer at the room temperature and a coercive force H_{c} of the magnetic record layer at the room temperature. Data signals are recorded by guiding a laser beam through the transparent substrate (1) to irradiate the magnetic record layer (3) in the magneto-optical recording medium and simultaneously applying a magnetic field modulated according to the data signals to the magnetic record layer (3). The recorded data signals are reproduced by guiding a linearly polarized laser beam through the transparent substrate (1) to irradiate the magnetic record layer (3) in the magneto-optical recording medium, and detecting rotation of plane of polarization of light reflected by the recording medium, which is caused by the magnetic Kerr effect and the magnetic Faraday effect in accordance with the data signals recorded in the magnetic record layer (3).

## Description

### BACKGROUND OF THE INVENTION

### Field of the Invention

The present invention relates to a magneto-optical recording medium and a data recording and reproducing method using it.

### Related Background Art

A magneto-optical recording method utilizes light and a magnetic material to record and reproduce data, so that it can enjoy both the non-volatile property and the rewritability in magnetic recording and the high-density recordability in optical recording. Thus, there has been a desire to put it to practical use. A magneto-optical recording medium of disk, which has a magnetic layer made of an amorphous rare-earth transition metal alloy, was recently put to practical use as a recording medium used in the magneto-optical recording method, and is to be used for example for memory of large-capacity data file. A CAV (constant angular velocity) method is presently used for recording in the above magneto-optical recording medium.

Since the angular velocity of medium is constant in the CAV method, the length of recording mark at an inner radial position is different from that at an outer radial position on the disk medium, which limits the recording capacity desired to be largely increased. Then a M-CAV (modified CAV) method was devised for recording data in constant mark length, which enabled recording in large capacity. In this method a recording frequency is changed depending upon the radial position on the magneto-optical recording medium of disk to maintain the recording mark length constant. Further, there is proposed a pit edge recording method in which data of "0" or "1" is assigned to an edge of recorded pit.

In addition to the desire to increase the recording capacity, another demand is high for shortening a time necessary for recording or reproducing a unit recording amount. To meet the demand, a recording process necessitating no erasing operation, that is, an overwrite function must be realized. A promising overwritable recording method is a magnetic modulation overwrite method in which a magnetic field is modulated according to data to be recorded. The magnetic modulation overwrite method normally uses a coil to generate the modulated magnetic field, and therefore the external magnetic field is relatively weak on the medium in recording.

The magneto-optical recording media which have been heretofore studied were mostly developed for the optical modulation recording method (in which the intensity or the like of light is modulated according to recording data). If such magneto-optical recording media were used for recording by the magnetic modulation overwrite method, the record and reproduction properties would be unsatisfactory under the weak external magnetic field, which is not practical. Also, if the modulation speed of magnetic field is enhanced to increase the recording density, the strength of external magnetic field is to be further lowered thereby. Then the magnetic inversion must be caused by a weaker external magnetic field in that case. In order to obtain satisfactory record and reproduction properties under such weaker external magnetic field, the magnetic inversion must readily occur in the magneto-optical recording medium.

### SUMMARY OF THE INVENTION

It is an object of the present invention to solve the problems in the conventional technology as described above and thereby to provide a magneto-optical recording medium in which data can be satisfactorily recorded under a weak magnetic field applied thereto, and a data recording and reproducing method using it.

The above object of the present invention can be achieved in a magneto-optical recording medium, which is made by consecutively laminating a first dielectric layer, a magnetic record layer, a second dielectric layer and a light reflection layer on a transparent substrate, by such an arrangement that a product (Mₛ×H_{c}) is not more than 1.0×10⁶ erg/cm³ between a saturation magnetization Mₛ of the magnetic record layer at the room temperature and a coercive force H_{c} of the magnetic record layer at the room temperature.

Also, a data recording method of the present invention is performed by guiding a laser beam through the transparent substrate to irradiate the magnetic record layer in the above recording medium and simultaneously applying a magnetic field modulated according to the data signals to the magnetic record layer.

Further, a data reproducing method of the present invention is performed by guiding a linearly polarized laser beam through the transparent substrate to irradiate the magnetic record layer in the above recording medium, and detecting rotation of plane of polarization of light reflected by said recording medium, which is caused by the magnetic Kerr effect and the magnetic Faraday effect in accordance with the data signals recorded in the magnetic record layer.

### BRIEF DESCRIPTION OF THE DRAWING

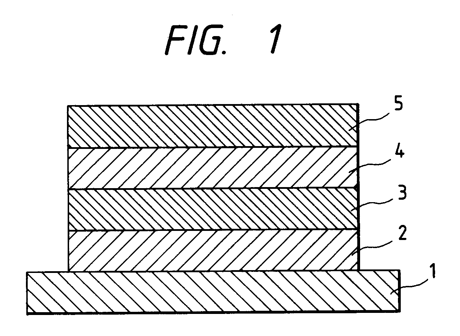

Fig. 1 is a schematic cross section to show an embodiment of magneto-optical recording medium according to the present invention.

### DESCRIPTION OF THE PREFERRED EMBODIMENT

Fig. 1 is a schematic cross section to show the structure of an embodiment of magneto-optical recording medium according to the present invention.

The magneto-optical recording medium is constructed as follows. A transparent substrate 1 which is optically transparent is made of a glass or plastic material. A first dielectric layer 2 made of an inorganic dielectric substance is provided on the transparent substrate 1 to obtain light interference effect and anti-corrosion effect. A magnetic layer 3 which is to be a record and reproduction layer in magneto-optical recording is formed on the first dielectric layer 2. The magnetic layer 3 is made for example of an amorphous rare-earth transition metal alloy, which has a saturation magnetization Mₛ and a coercive force H_{c} at room temperature to provide a product thereof Mₛ·H_{c} of not more than 1.0×10⁶ erg/cm³. Provided on the magnetic layer 3 is a second dielectric layer 4 to prevent corrosion of the magnetic layer 3 and to produce the light interference effect. Further, a light reflection layer 5 which is for example a metal thin film is provided on the second dielectric layer 4. The light reflection layer 5 reflects light passing through the magnetic layer 3 out of the light incident into the transparent substrate 1 to direct it again toward the transparent substrate 1 in reproducing data, whereby the magnetic Faraday effect as well as the magnetic Kerr effect can be effective for reproduction signals, improving a CN ratio (carrier-to-noise ratio) thereof. The layers should be preferably formed in a continuous manner without breaking vacuum in a continuous film-forming apparatus, when the layers are laminated on the transparent substrate 1. Also, at least one of the first and second dielectric layers should be preferably made of a nitride to prevent the corrosion of magnetic layer.

Data is recorded in the magneto-optical recording medium such that a laser beam is guided to enter the transparent substrate 1 with application of an external magnetic field modulated according to data signals to be recorded, so as to heat a point irradiated thereby, whereby magnetization at the irradiated point in the magnetic layer 3 is oriented in the direction of modulated magnetic field. Also, the recorded signals are reproduced such that a linearly polarized laser beam weaker than the laser beam used in recording is guided to enter the transparent substrate 1 and that reflected light is detected with respect to rotation of plane of polarization thereof caused by the magnetic Kerr effect and the magnetic Faraday effect in accordance with the data signals recorded in the magnetic layer 3.

Next described are examples of the magneto-optical recording medium actually produced according to the present invention in comparison with comparative examples.

### Example 1

The transparent substrate 1 was a pre-grooved polycarbonate substrate in diameter of 130 mm. This substrate was set in a magnetron sputtering system having a plurality of targets. A SiN film was first formed in thickness of 102 nm as the first dielectric layer 2 to obtain anti-oxidant effect and interference effect. Then a surface treatment was carried out by sputter etching. An amorphous TbFeCo film was formed in thickness of 20 nm as the magnetic layer 3 for record and reproduction. Then a SiN film was formed in thickness of 30 nm as the second dielectric layer 4 to enhance the anti-oxidant effect and interference effect. An Al film was finally formed in thickness of 45 nm as the light reflection layer 5, thus obtaining a magneto-optical recording medium. The layers were continuously formed without breaking vacuum. Upon forming the magnetic layer 3, two types of targets were used, i.e. a target of Tb and a target of Fe₈₈Co₁₂. An atomic ratio between the rare earth element and the iron-group elements was adjusted in the magnetic layer 3 by controlling the power applied to the two targets, whereby the product (Mₛ×H_{c}) between saturation magnetization Mₛ and coercive force H_{c} at room temperature was adjusted.

The magneto-optical recording medium was used to measure the product (Mₛ×H_{c}) between saturation magnetization Mₛ and coercive force H_{c} at room temperature in the magnetic layer 3. The measured product was 0.4×10⁶ erg/cm³.

The magneto-optical recording medium was then subjected to record and reproduction tests in the magnetic modulation recording method. The record and reproduction tests were conducted such that while the magneto-optical recording medium was rotated at rotation speed of 2400 rpm, data was recorded at a radial position of 36 mm to the center with intensity of modulation magnetic field being changed at modulation frequency of 6.2 MHz, and that the data was reproduced thereafter. A magnetic sensitivity was defined as an intensity of the modulated magnetic field when the signal-to-noise ratio became 49 dB. The test result is shown in Table 1.

### Example 2

A magneto-optical recording medium was produced in the same manner as in Example 1 except that the atomic ratio between the rare earth element and the iron-group elements in the magnetic layer 3 was modified from that in Example 1. The product (Mₛ×H_{c}) between saturation magnetization Mₛ and coercive force H_{c} was 0.7×10⁶ erg/cm³ at room temperature in the magnetic layer 3. The same record and reproduction tests as in Example 1 were conducted for the magneto-optical recording medium, and the magnetic sensitivity thereof was obtained. The test result is also shown in Table 1.

### Comparative Example 1

A magneto-optical recording medium was produced in the same manner as in Example 1 except that the sputter etching treatment was omitted on the surface of the first dielectric layer 2. The product (Mₛ×H_{c}) between saturation magnetization Mₛ and coercive force H_{c} was 1.1×10⁶ erg/cm³ at room temperature in the magnetic layer 3. The same record and reproduction tests as in Example 1 were conducted for the magneto-optical recording medium, and the magnetic sensitivity thereof was obtained. The test result is shown in Table 1.

### Comparative Example 2

A magneto-optical recording medium was produced in the same manner as in Example 2 except that the sputter etching treatment was omitted on the surface of the first dielectric layer 2. The product (Mₛ×H_{c}) between saturation magnetization Mₛ and coercive force H_{c} was 1.9×10⁶ erg/cm³ at room temperature in the magnetic layer 3. The same record and reproduction tests as in Example 1 were conducted for the magneto-optical recording medium, and the magnetic sensitivity thereof was obtained. The test result is shown in Table 1.

**TABLE 1**

| | Mₛ·H_{c} (erg/cm³) | Magnetic Sensitivity (Oe) |
|---|---|---|
| Example 1 | 0.4×10⁶ | 104 |
| Example 2 | 0.7×10⁶ | 110 |
| Comparative Example 1 | 1.1×10⁶ | 143 |
| Comparative Example 2 | 1.9×10⁶ | 148 |

As apparent from Table 1, the magneto-optical recording media (Examples 1, 2) are highly sensitive with magnetic sensitivity in the range of about 100 to 110 Oe if the product (Mₛ×H_{c}) between saturation magnetization Mₛ and coercive force H_{c} is not more than 1.0×10⁶ erg/cm³ at room temperature in the magnetic layer. Such magneto-optical recording media permitted easy recording under a very weak external magnetic field. In contrast, the magneto-optical recording media (Comparative Examples 1, 2) are low in sensitivity with magnetic sensitivity in the range of about 140 to 150 Oe if the product (Mₛ×H_{c}) between saturation magnetization Mₛ and coercive force H_{c} is over 1.0×10⁶ erg/cm³ at room temperature. Such media with low sensitivity were not appropriate to recording under a weak external magnetic field.

As described above, the present invention is effective to obtain satisfactory record and reproduction properties under a very weak external magnetic field by the arrangement that the product (Mₛ×H_{c}) between saturation magnetization Mₛ and coercive force H_{c} is kept not more than 1.0×10⁶ erg/cm³ at room temperature in the magnetic layer.

Various embodiments and modifications of the present invention can be constructed in addition to the embodiment as described above. It should be noted that the present invention involves all such embodiments and modifications within the scope of the appended claims.

## Claims

1. A magneto-optical recording medium which is made by consecutively laminating a first dielectric layer (2), a magnetic record layer (3), a second dielectric layer (4) and a light reflection layer (5) on a transparent substrate (1), characterized in that a product (Mₛ×H_{c}) is not more than 1.0×10⁶ erg/cm³ between a saturation magnetization Mₛ of said magnetic record layer at the room temperature and a coercive force H_{c} of the magnetic record layer at the room temperature.

2. A magneto-optical recording medium according to Claim 1, wherein said magnetic record layer (3) is made of an amorphous rare-earth transition metal alloy.

3. A magneto-optical recording medium according to Claim 1, wherein said light reflection layer (5) is a metal thin film.

4. A magneto-optical recording medium according to Claim 1, wherein at least one of said first and second dielectric layers (2, 4) is a thin film of a nitride.

5. A method for recording data signals by guiding a laser beam through the transparent substrate (1) to irradiate the magnetic record layer (3) in the magneto-optical recording medium as set forth in Claim 1 and simultaneously applying a magnetic field modulated according to the data signals to the magnetic record layer (3).

6. A method for reproducing data signals by guiding a linearly polarized laser beam through the transparent substrate (1) to irradiate the magnetic record layer (3) in the magneto-optical recording medium as set forth in Claim 1, and detecting rotation of plane of polarization of light reflected by said recording medium, which is caused by the magnetic Kerr effect and the magnetic Faraday effect in accordance with the data signals recorded in the magnetic record layer (3).

7. A magneto-optical recording medium wherein the product of the saturation magnetization and the coercive force of at least one magneto-optic layer incorporated in the medium is chosen so as to enable magnetic inversion of the layer(s) to take place under an external modulated magnetic field permitting increased recording speeds.
